# EUROPÄISCHE PATENTSCHRIFT

(11) **EP 1 162 512 B1**
(45) Veröffentlichungstag und Bekanntmachung des Hinweises auf die Patenterteilung: **27.07.2005**
(21) Anmeldenummer: 01111175.4
(22) Anmeldetag: 11.05.2001
(51) Int. Cl.: G03G 15/00

(54) **Vorrichtung und Verfahren zur Steuerung der Auswahl eines Druckmediums für einen Druckauftrag**
Device and method for controlling the selection of a printing medium for a print job
Dispositif et procédé pour commander la sélection d'un support d'impression dans une tâche d'impression

(30) Priorität: 17.05.2000 US 572367
(43) Veröffentlichungstag der Anmeldung: 12.12.2001
(73) Patentinhaber: Eastman Kodak Company, Rochester, New York 14650 (US)
(72) Erfinder: Guarino, Kevin J., Rochester, New York 14624 (US)
(74) Vertreter: WAGNER & GEYER

(56) Entgegenhaltungen:
- DE-A- 4 122 421
- US-A- 4 797 706
- US-A- 5 502 555

## Beschreibung

Steuerungen eines Druckvorgangs zur Auswahl von Druckmedien sind schon bekannt. So beschreibt US-A-5 502 555 eine Steuerungsvorrichtung, die Druckmedienvorräte abfragt und dem Bediener zur Auswahl zur Verfügung stellt, unabhängig davon, in welcher angeschlossenen Druckvorrichtung sich diese Druckmedienvorräte befinden. Außerdem wird dort auch der Inhalt der Druckmedienvorräte mit den Vorratsbehältern verknüpft, um hochwertige S/W-Kopien und Farbbildseiten kostengünstig herzustellen.

Die vorliegende Erfindung betrifft Routinen für den elektronischen Druckvorgang und insbesondere Software für die Auswahl von hierfür benötigten Medien.

Die bekannte Druckersprache (Page Description Language) PCL5 bietet die Funktionalität, Druckmedien-Vorratsfächer mittels einer standardisierten, eine numerische Identifizierung der Vorratsfächer beinhaltenden Escape Sequence zu wählen. Für jede Seite eines Druckauftrags kann ein unterschiedliches Druckmedium gewählt werden. Diese Funktionalität ist bei den meisten PCL5-Client-Druckertreibern verfügbar. Jede logische Identifizierungsnummer der Vorratsfächer ist einem bestimmten, tatsächlich vorhandenen Vorratsfach der jeweiligen Vorrichtung zugeordnet.

Diese Funktionalität bewirkt eine Abhängigkeit des Datenstroms für einen bestimmten Druckauftrag von einem bestimmten Zielgerät, da die den tatsächlichen Vorratsfächern zugeordneten Identifizierungen von Gerät zu Gerät unterschiedlich sind. Dies bedeutet, dass bei ein- und demselben Druckauftrag je nach dem gewählten Drucker Druckmedien aus unterschiedlichen Vorratsfächern bezogen werden. Gegenwärtig besteht die einzige Möglichkeit, das gewünschte Ergebnis zu gewährleisten, in einer Editierung oder Rekonfiguration des Druckauftrags.

Die meisten PCL5-Druckertreiber, die die Auswahl von Druckmedien-Vorratsfächern unterstützen, sind auf eine bestimmte Anzahl von Vorratsfach-Identifizierungen beschränkt; in der Regel sind es 1-8 Vorratsfächer. Dies wird zu einem Problem, wenn eine Druckvorrichtung über mehr als 8 Druckmedien-Vorratsfächer verfügt.

Wenn ein archivierter Druckauftrag oder ein auf einem Großrechner erzeugter Druckauftrag an eine Druckvorrichtung weitergeleitet wird, müssen die tatsächlich vorhandenen Druckmedien-Vorratsfächer auf dieselbe Weise wie bei der ursprünglichen Erstellung des Druckauftrags konfiguriert sein, da andernfalls der falsche Druckmediumsvorrat für den Auftrag verwendet wird.

Aufgabe der vorliegenden Erfindung ist es, die Zuordnung der für einen Druckauftrag spezifizierten logischen Identifizierungsnummer für ein Druckmedien-Vorratsfach zu einem beliebigen, tatsächlich vorhandenen Druckmedien-Vorratsfach eines Zielgeräts zu ermöglichen. Dies kann durch ein Konfigurationstool auf der Ebene des Zielgeräts oder durch einen Befehl auf der Ebene des Druckauftrags-Datenstroms erreicht werden.

Die Aufgabe wird erfindungsgemäß durch die Merkmale des Verfahrens gemäß Anspruch 1 und der Vorrichtung gemäß Anspruch 8 gelöst. Weitere Merkmale ergeben sich aus den abhängigen Ansprüchen.

Die vorliegende Erfindung sieht eine Nachschlagetabelle vor, die insbesondere in die Software integriert ist und eine logische Identifizierungsnummer für ein Vorratsfach jeweils einem beliebigen tatsächlich vorhandenen Druckmedien-Vorratsfach der Druckvorrichtung zuordnet. Bei jedem Erscheinen eines logischen Befehls bezüglich der Vorratsfächer im Druckauftrags-Datenstrom wird die Nachschlagetabelle aufgerufen. Die Nachschlagetabelle ist dynamisch und basiert auf der aktuell gewählten Druckvorrichtung und den Einstellungen auf der Ebene des Druckauftrags.

Die Erfindung ermöglicht es einem Kunden, einen bereits vorhandenen Druckauftrag auszuwählen, der eine Identifizierung des gewünschten Druckmedien-Vorratfachs enthält, und das genaue Verhalten auf der Basis der Konfigurierung der tatsächlich vorhandenen Druckmedien-Vorratsfächer der aktuell gewählten Druckvorrichtung zu konfigurieren, ohne dabei den ursprünglichen Druckauftrag zu verändern.

Die Erfindung bietet die Möglichkeit, bei Bedarf Druckmedien aus verschiedenen Druckmedien-Vorratsmodulen zu wählen, von denen jedes über eine Vielzahl von verwendbaren Druckmedien verfügt. Ein Drucker, der in seiner Standardkonfiguration nicht genügend verschiedene Druckmedien bevorraten kann, kann z. B. durch ein Vorratsmodul ergänzt werden.

Die Merkmale der vorliegenden Erfindung werden in der folgenden Beschreibung bevorzugter Ausführungsformen in Zusammenhang mit der beigefügten Zeichnung näher erläutert.

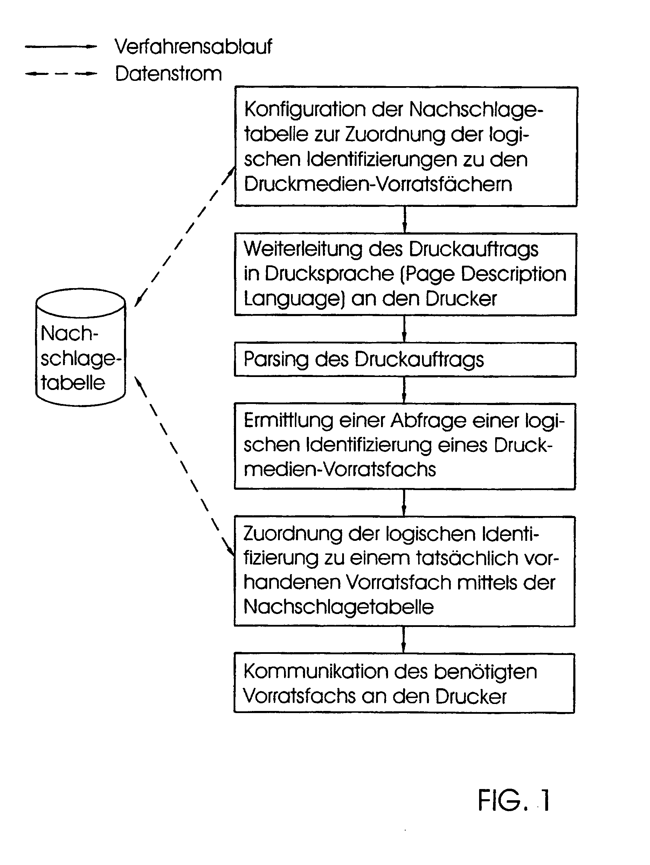

Fig. 1 zeigt ein Flussdiagramm eines Auswahlvorgangs.

Die vorliegende Erfindung betrifft die Ausführung eines Druckauftrags, der von einem Eingabegerät, z. B. einem Computer oder einer Textverarbeitungseinrichtung, ausgeht. Es ist bekannt, dass die Eingabevorrichtung mittels eines Software-Datenstroms in einer Druckersprache, einer sog. Page Description Language (PDL) wie z. B. PCL5, mit einem Zielgerät kommuniziert, z. B. mit einer elektronischen Markierungsvorrichtung oder einem elektronischen Drucker, und dieser Text- und Formatbefehle eines Dokuments übermittelt.

Formatbefehle umfassen insbesondere Anweisungen hinsichtlich der Wahl des zu verarbeitenden Druckmediums und somit insbesondere des zu verwendenden Druckmedienvorrats. Unter Umständen müssen mehrere Arten von Druckmedien verwendet werden. Mögliche Arten von Druckmedien sind Papier oder transparente Folien, wobei sich beides zusätzlich in Größe, Farbe und Gewicht unterscheiden kann. Außerdem kann Papier als Bogen oder Rollen bevorratet werden. Wenn verschiedene Seiten oder Abschnitte eines Dokuments auf verschiedene Druckmedien gedruckt werden sollen, so werden diesbezügliche Befehle in den Druckauftrags-Datenstrom eingefügt. Bekannte Druckauftrags-Datenströme sind jedoch für ein bestimmtes Zielgerät konfiguriert, d. h. ein Druckauftrag, der für einen bestimmten Drucker konfiguriert wurde, kann nicht einfach an einen anderen Drucker eines anderen Typs geleitet werden. Insbesondere verfügt jeder Drucker über seine eigenen Identifizierungen für die Druckmedien-Vorratsfächer. Bei dem Versuch, einen für einen ersten Drucker bestimmten Druckauftrag an einen zweiten Drucker zu leiten, wird entweder der Druckauftrag nicht ausgeführt oder es treten Fehler auf. Bisher war eine Konvertierung der Auftragsdaten durch einen geschulten Fachmann nötig, damit der Druckauftrag fehlerfrei von dem zweiten Drucker akzeptiert und ausgeführt wurde.

Die vorliegende Erfindung sieht vor, dass ein ungeschulter Bediener mit wenigen Handgriffen die zur fehlerfreien Ausführung des Druckauftrags nötigen Befehle in den Druckauftrags-Datenstrom einfügen kann. Eine in das Zielgerät integrierte logische Steuerungseinheit (logic control unit (LCU)) kann einen Computer umfassen und weist ein gespeichertes Programm auf, das sequenziell auf einlaufende Befehle reagiert.

Insbesondere umfasst das gespeicherte Programm eine Nachschlagetabelle, die eine unveränderliche logische Identifizierung der Fächer einem tatsächlich vorhandenen Druckmedien-Vorratsfach zuordnet, das sich in Abhängigkeit von dem jeweiligen Druckauftrag oder dem Eingabegerät ändern kann. Wenn zu einem beliebigen Zeitpunkt im Datenstrom ein bestimmtes Druckmedien-Vorratsfach identifiziert werden soll, wird auf die Nachschlagetabelle zugegriffen, um die logische Identifizierung des Fachs mit dem gewünschten tatsächlichen Druckmedienfach abzugleichen. Die Nachschlagetabelle wird danach erst wieder aufgerufen, wenn ein anderes Druckmedium benötigt wird.

Bei einfachen Druckaufträgen, bei denen für ein Dokument nur eine Art von Druckmedium verwendet wird, wird nur eine logische Identifizierung eines Fachs und damit nur ein entsprechendes tatsächlich vorhandenes Fach eingesetzt. Bei Druckaufträgen, bei denen mehr als eine Art von Druckmedium benötigt wird, enthält die Nachschlagetabelle eine Auswahl verschiedener logischer Identifizierungen von Fächern und deren entsprechende tatsächlich vorhandene Druckmedien-Vorratsfächer. Ein Bediener kann die entsprechende Nachschlagetabelle am Zielgerät oder bei der Auftragsbearbeitung am Eingabegerät eingeben.

Das in Fig. 1 dargestellte Flussdiagramm zeigt die Verwendung der vorliegenden Erfindung. Ein Bediener erstellt die Nachschlagetabelle, in der logische Identifizierungen von Fächern tatsächlichen Druckmediumsfächern zugeordnet werden. Durch einen geeigneten Befehl wird der Datenstrom in einer Druckersprache, z. B. PCL5, an die logische Steuerungseinheit gesandt, wo er durch sog. Parsing analysiert wird. Wenn eine Abfrage einer logischen Identifizierung eines Fachs im Datenstrom erfasst wird, wird diese auf der Basis der Nachschlagetabelle dem tatsächlichen Vorratsfach zugeordnet, so dass das geeignete Vorratsfach gewählt wird.

Wenn ein Zielgerät eines anderen Typs eingesetzt werden soll, erstellt der Bediener eine entsprechende Nachschlagetabelle und verfährt anschließend auf die beschriebene Weise. Die Genauigkeit der Nachschlagetabelle ist natürlich wie bei jedem Druckauftrag abhängig von der korrekten Bestückung der Vorratsfächer.

Eine Nachschlagetabelle kann bereits vom Hersteller des Druckers eingerichtet werden, so dass für die Zuordnung der tatsächlich vorhandenen Vorratsfächer zu den logischen Identifizierungen der Fächer eine Standardeinstellung vorhanden ist. Dies schließt natürlich eine Veränderung der Einstellungen durch den Bediener nicht aus. Die Standard-Nachschlagetabelle kann z. B. wie folgt aussehen:

| Tatsächlich vorhandenes Vorratsfach (6 Fächer) | logische Identifizierung |
|---|---|
| 1 | 1 |
| 2 | 2 |
| 3 | 3 |
| 4 | 4 |
| 5 | 5 |
| 6 | 6 |

Die veränderte Tabelle kann dagegen wie folgt aussehen:

| tatsächliches Vorratsfach | logische Identifizierung |
|---|---|
| 1 | 1 |
| 2 | 7 |
| 3 | 10 |
| 4 | 4 |
| 5 | 5 |
| 6 | 6 |

Diese durch den Bediener veränderte Tabelle kann als neue Standardeinstellung gewählt werden.

Der große Vorteil der vorliegenden Erfindung besteht darin, dass sie keine drastischen Veränderungen der den archivierten Druckaufträgen zugeordneten Software erfordert. Dies bedeutet eine erhebliche Zeit- und Kostenersparnis für den Bediener sowie eine Erweiterung der Flexibilität bei der Wahl des Druckers. Wenn der Bediener mit einem bestimmten Drucker nicht zufrieden ist und einen Drucker eines anderen Typs bevorzugt, so beseitigt die Integration der vorliegenden Erfindung in den neuen Drucker die Notwendigkeit der grundlegenden Modifizierung der Software und reduziert somit die Abneigung gegen die Neuinstallation von Druckern.

Die vorliegende Erfindung umfasst alle Alternativen, Modifizierungen und Äquivalente, wie sie durch die nachfolgend beigefügten Ansprüche definiert sind.

## Patentansprüche

1. Verfahren zur Konfigurierung eines Druckauftrags mit der Vorrichtung nach Anspruch 8.

2. Verfahren zur Konfigurierung eines Druckauftrags nach Anspruch 1, **gekennzeichnet durch** die folgenden Schritte:
a) Erstellen einer Nachschlagetabelle, welche die Zuordnung einer logischen Identifizierung eines Vorratsfachs in einem Druckauftrags-Datenstrom zu einem verfügbaren, tatsächlich vorhandenen Druckmedien-Vorratsfach ermöglicht;
b) Übermitteln eines Druckauftrag-Datenstroms an einen Drucker, wobei der Druckauftrags-Datenstrom für einen anderen Drucker konfiguriert war;
c) Erfassen einer Abfrage für eine logische Identifizierung eines Druckmedien-Vorratsfachs im Druckauftrags-Datenstrom;
d) Zuordnen einer logischen Identifizierung eines Vorratsfachs in einem Druckauftrags-Datenstrom zu einem verfügbaren, tatsächlich vorhandenen Druckmedien-Vorratsfach auf der Grundlage der Nachschlagetabelle, die in einer logischen Steuerungseinheit (LCU) des Druckers bereitgestellt ist; und
e) Kommunizieren des benötigten Druckmedien-Vorratsfachs an den Drucker.

3. Verfahren nach Anspruch 2,
**dadurch gekennzeichnet,**
**dass** der Schritt des Erstellens der Nachschlagetabelle dynamisch verläuft und auf dem aktuell angewählten Drucker und den Einstellungen auf der Ebene des Druckauftrags basiert.

4. Verfahren nach einem der Ansprüche 2 bis 3,
**dadurch gekennzeichnet,**
**dass** das Verfahren zusätzlich den folgenden Schritt aufweist: Hinzufügen eines Vorratsmoduls zum Drucker, wenn dieser in seiner Standardkonfiguration nicht über genügend unterschiedliche Druckmedien-Vorratsfächer verfügt.

5. Verfahren nach einem der Ansprüche 2 bis 4,
**dadurch gekennzeichnet,**
**dass** der Schritt des Zuordnens nur dann erfolgt, wenn unterschiedliche Druckmedien erforderlich sind.

6. Verfahren nach einem der Ansprüche 2 bis 5,
**dadurch gekennzeichnet,**
**dass** beim Schritt des Erfassens einer Abfrage die Abfrage der logischen Identifizierung eines Vorratsfachs in einem Druckauftrags-Datenstrom in einer Druckersprache (Page Description Language (PDL)) erscheint.

7. Verfahren nach Anspruch 6,
**dadurch gekennzeichnet,**
**dass** der Druckauftrags-Datenstrom in der Druckersprache PCL5 vorliegt.

8. Vorrichtung zur Steuerung der Druckmedienauswahl in einem Drucker in einem Druckauftrags-Datenstrom , der in einer Druckersprache für unterschiedliche Drucker konfiguriert ist,
**dadurch gekennzeichnet,**
**dass** eine im Druckauftrags-Datenstrom erscheinende logische Identifizierung eines Vorratsfachs mittels einer Nachschlagetabelle einem tatsächlich vorhandenen Druckmedien-Vorratsfach zugeordnet ist.

9. Vorrichtung nach Anspruch 8,
**dadurch gekennzeichnet,**
**dass** eine Vielzahl von logischen Identifizierungen von Vorratsfächern und eine entsprechende Vielzahl von tatsächlich vorhandenen Druckmedien-Vorratsfächern vorgesehen sind.

10. Vorrichtung nach einem der Ansprüche 8 bis 9,
**dadurch gekennzeichnet,**
**dass** die Nachschlagetabelle von einem Eingabegerät oder einem Zielgerät stammt.

11. Vorrichtung nach einem der Ansprüche 8 bis 10,
**dadurch gekennzeichnet,**
**dass** sich mindestens ein Druckmedienvorrat in einem beliebigen Modul einer Vielzahl von Druckmedien-Vorratsmodulen befindet und dass sich mindestens ein Druckmedienvorrat in einem beliebigen Zielgerät einer Vielzahl von Zielgeräten befindet.

12. Vorrichtung nach einem der Ansprüche 8 bis 11,
**dadurch gekennzeichnet,**
**dass** der Druckauftrag ein archivierter Druckauftrag ist oder ein auf einem Großrechner erzeugter Druckauftrag.

## Claims

1. A method of configuring a print job for the printing device of claim 8,
**characterized in**
**that** a logical identification of a supply in a print job data stream is allocated to an available, actually existing print media supply.

2. Method of configuring a print job according to claim 1 comprising the following steps:
(a) creating a look-up table allowing the allocation of a logical identification of a supply in a print job data stream to an available, actually existing print media supply;
(b) transmitting a print job data stream to a printing device, wherein the print job data stream was configured for a different printing device;
(c) detecting a request for a logical identification of a print media supply in the print job data stream;
(d) allocating a logical identification of a supply in a print job data stream to an available, actually existing print media supply based on the look-up table provided in a logic control unit (LCU) of the printing device;
(e) communicating the required print media supply to the printing device.

3. Method according to claim 2,
**characterized in**
**that** in the step of creating the look-up table is dynamic and is based on the currently selected printing device and the settings on the level of the print job.

4. Method according to one of claims 2 to 3,
wherein
the method additionally comprises the following step:
- Adding a supply module to the printing device when the printing device does not have enough different print media supplies in its default configuration.

5. Method according to one of claims 2 to 4,
**characterized in**
**that** the step of allocating in only done when a different print medium is required.

6. Method according to one of claim 2 to 5,
**characterized in**
**that** the step of detecting the request, the request of the logical identification of a supply in a print job data stream occurs in a printer language (Page Description Language (PDL)).

7. Method according to claim 6,
**characterized in**
**that** the print job data stream is provided in the printer language PCL5.

8. Device for controlling the print media selection of a printing device in a print job data stream configured in a printer language for a different printing device,
**characterized in**
**that** a logical identification of a supply occurring in the print job data stream is allocated to an actually existing print media supply by means of a look-up table.

9. A device according to claim 8,
**characterized in**
**that** a plurality of logical identifications of supplies and a corresponding plurality of actually existing print media supplies are provided.

10. A device according to one of claims 8 to 9,
**characterized in**
**that** the look-up table originates from an input device or a destination device.

11. A device according to one of claims 8 to 10,
**characterized in**
**that** at least one print media supply is located in any one module of a plurality of print media supply modules and that at least one print media supply is in any one destination device of a plurality of destination devices.

12. A device according to one of claims 8 to 11,
**characterized in**
**that** the print job is an archived print job or a print job generated on a mainframe computer.

## Revendications

1. Procédé de configuration d'une tâche d'impression pour le dispositif d'impression selon la revendication 8,
**caractérisé en ce que**
une identification logique d'une fourniture dans un flux de données de tâche d'impression est allouée à une fourniture de supports d'impression disponible existante.

2. Procédé de configuration d'une tâche d'impression selon la revendication 1, comprenant les étapes suivantes :
(a) la création d'une table de transfert permettant l'allocation d'une identification logique d'une fourniture dans un flux de données de tâche d'impression à une fourniture de supports d'impression disponible existante,
(b) la transmission d'un flux de données de tâche d'impression à un dispositif d'impression, dans laquelle le flux de données de tâche d'impression a été configuré pour un dispositif d'impression différent,
(c) la détection d'une demande pour une identification logique d'une fourniture de supports d'impression dans le flux de données de tâche d'impression,
(d) l'allocation d'une identification logique d'une fourniture dans un flux de données de tâche d'impression à une fourniture de supports d'impression disponible existante sur la base de la table de transfert prévue dans une unité de commande logique (LCU) du dispositif d'impression,
(e) la communication de la fourniture de supports d'impression demandée au dispositif d'impression.

3. Procédé selon la revendication 2,
**caractérisé en ce que**
dans l'étape de création, la table de transfert est dynamique et est fondée sur le dispositif d'impression actuellement sélectionné et les réglages sur le niveau de la tâche d'impression.

4. Procédé selon l'une des revendications 2 et 3,
dans lequel
le procédé comprend en outre l'étape suivante :
- ajouter un module de fourniture au dispositif d'impression lorsque le dispositif d'impression n'a pas suffisamment de fournitures de supports d'impression différentes dans sa configuration par défaut.

5. Procédé selon l'une des revendications 2 à 4,
**caractérisé en ce que**
l'étape d'allocation est uniquement effectuée lorsqu'un support d'impression différent est requis.

6. Procédé selon l'une des revendications 2 à 5,
**caractérisé en ce que**
dans l'étape de détection de la demande, la demande de l'identification logique d'une fourniture dans un flux de données de tâche d'impression a lieu dans un langage de dispositif d'impression (langage de description de page (PDL)).

7. Procédé selon la revendication 6,
**caractérisé en ce que**
le flux de données de la tâche d'impression est fourni dans le langage de dispositif d'impression PCL5.

8. Dispositif destiné à commander la sélection de supports d'impression d'un dispositif d'impression dans un flux de données de tâche d'impression configuré dans un langage de dispositif d'impression pour un dispositif d'impression différent,
**caractérisé en ce que**
une identification logique d'une fourniture apparaissant dans le flux de données de la tâche d'impression est allouée à une fourniture de supports d'impression existante au moyen d'une table de transfert.

9. Dispositif selon la revendication 8,
**caractérisé en ce que**
une pluralité d'identifications logiques des fournitures et une pluralité correspondante de fournitures de supports d'impression existantes sont prévues.

10. Dispositif selon l'une des revendications 8 et 9,
**caractérisé en ce que**
la table de transfert a pour origine un dispositif d'entrée ou un dispositif de destination.

11. Dispositif selon l'une des revendications 8 à 10,
**caractérisé en ce que**
au moins une fourniture de supports d'impression est située dans un module quelconque d'une pluralité de modules de fournitures de supports d'impression et **en ce qu'**au moins une fourniture de supports d'impression est dans un dispositif de destination quelconque d'une pluralité de dispositifs de destination.

12. Dispositif selon l'une des revendications 8 à 11,
**caractérisé en ce que**
la tâche d'impression est une tâche d'impression archivée ou une tâche d'impression générée sur un ordinateur central.
